# EUROPEAN PATENT SPECIFICATION

(11) **EP 1 990 354 B1**
(45) Date of publication and mention of the grant of the patent: **22.08.2012**
(21) Application number: 07425264.4
(22) Date of filing: 08.05.2007
(51) Int. Cl.: C08G 18/38

(54) **Viscoelastic polyurethane foam and process for the preparation thereof**
Viskoelastischer Polyurethanschaum und Verfahren zu seiner Herstellung
Mousse en polyuréthane viscoélastique et procédé de préparation correspondant

(43) Date of publication of application: 12.11.2008
(73) Proprietor: Eigenmann & Veronelli S.p.A., 20017 Rho (MI) (IT); New Wind S.r.l., 72017 Ostuni (BR) (IT)
(72) Inventor: Praderio, Francesco, 21051 Arcisate (VA) (IT); Muha, Krunoslav, 20020 Arese (MI) (IT); Cruccas, Nilson, 85034 Francavilla Sul Sinni (PZ) (IT)
(74) Representative: Perani, Aurelio

(56) References cited:
- US-A- 4 130 698
- US-A- 4 791 146
- US-A- 5 670 553
- Madden, JP et al.: "A Study of Polyether-Polyol and Polyester-Polyol-Based Rigid Urethane Foam Systems", September 1971 (1971-09), Allied Signal Inc, Kansas City, MS
- NORDON, A ET AL.: "Determination of ethylene oxide content of polyether polyols by low field 1H-NMR nuclear magnetic resonance spectroscopy", ANALYTICA CHIMICA ACTA, vol. 472, no. 1-2, 8 October 2002 (2002-10-08), pages 133-140,
- CAZES, J: 'A question of Molecular Weight', [Online] Retrieved from the Internet: <URL:www.ampolymer.com/QuestionMw.html> [retrieved on 2011-07-05]

## Description

The present invention concerns a viscoelastic polyurethane foam obtainable by a new reaction system allowing the foam itself to have improved technical properties.

Flexible polyurethane foams have a cellular backbone containing a high percentage of gas in its own volume. Their features of softness and elasticity make them particularly suitable as padding in several types of applications. Particularly, it is known their use in furnishing components, such as mattresses and cushions, and in car field, for padding seats and backrests,for which the surface softness and a high capability of supporting and distributing the human body weight are appreciated properties.

For such applications, viscoelastic polyurethane foams are known, that are capable to self-model owing to a compression, for example under the body mass weight, then slowly returning to their own original shape, once removed the compression source. During the compression step, such foams take the form of the compressing body, exactly reproduce the imprint while occupying even the minimum room of gas inside. In case of application as mattress, for example, the whole lying flat body finds therefore support and its weight is uniformly distributed on the whole support surface.

Different types of polyurethane foams are known having some improved properties, which are obtained through suitable expedients in the reaction mixture.

From the European patent n. 1240228, viscoelastic polyurethane foams are known, having a very low resilience, a good laceration strength, and a very high elongation. According to the description, such foams are obtained by reaction of a polyisocyanate composition with three types of polyoxyethylene-polyoxypropilene polyols and optionally of a polyalkyleneglycol, according to specific ratios by weight.

From the International patent application WO 2004/020496, combinations of polyols are known, that can be used for producing viscoelastic polyurethane foams having high resilience. Particularly, such combinations comprise a polyalkoxylated monol, a polyalkoxylated diol, and a polyalkoxylated polyol having nominal functionality of at least 3.

From the US patent application n. 2005/0038133, a polyurethane foam having a particular density is known, which maximizes the viscoelastic nature thereof. It is a reaction product of an isocyanate MDI component with a first polyether polyol, a second polyether polyol and a chain extender having 2 to 8 carbon atoms and an average molecular weight less than 1000. The foam shows a first glass transition temperature at 15 to 70°C and a second glass transition temperature at -40 to -60°C.

US 4791146 dicloses polyurethane foams obtainable from a an isocyanate with polyols composition containing a catalyst a blowing agent and a fatty acid derivative selected from:
a) a long chain organic acid
b) a polyol long chain ester,
c) a mixture of (a) and (b).

These foams are in particular suitable for use in the automotive industry

US 4130698 describes a mould release system, which consists essentially of 99,9-80% of an aromatic polyisocyanate , containing at least two isocyanate groups and form 0.1 to 20% of a fatty acid ester.

US 5670333 describes an internal mould release system (3) comprising:
a) a carboxylic acid and
b) a compound selected from a fatty polyester and a fatty acid amide,
for use in the process of preparation of polyurethane foams in the presence of (1) a polyisocyanate,
(2) a compound containing a plurality of isocyanate groups.

Amongst the technical performances of the viscoelastic foams, the capability of keeping the viscoelastic properties upon varying the operation temperature is important. Particularly, the resilience of the slow return step after the compression release is a parameter significantly affected by the temperature. Particular applications, such as those above-mentioned for car field, subject the viscoelastic polyurethane foam to a wide range of temperatures, particularly in regions having seasons very cold or seasons very hot. Accordingly, the foam has to be capable to meet the necessary requirements both at coldest temperatures and at hottest temperatures.

In addition, in order to obtain the maximum comfort, not only a high elastic return at different temperatures, but even density and resilience of the polyurethane foam itself are important, as well as its capability of keeping unchanged the high performances in the course of time.

An object of the present invention is therefore to provide a viscoelastic polyurethane foam having good performances in a wide range of temperatures.

A further object of the invention is to provide a process for manufacturing such a viscoelastic polyurethane foam that can make the foam suitable for applications of mainly domestic and car use. The above objects are achieved by a viscoelastic polyurethane foam obtainable by the reaction system as indicated in claim 1. Further advantages and preferred embodiments of the invention are indicated in the dependent claims.

The viscoelastic polyurethane foam according to the invention is obtainable by the reaction system comprising a composition a) of isocyanate MDI and a polyol composition b) comprising at least an expanding agent, at least a fatty derivative selected from an amide of an amine C2-C10 and a fatty acid C6-C22 "alone or with" an ester of an alcohol C2-C10 and a fatty acid C6-C22, at least a surfactant, at least a catalyst and at least a polyether polyol having a high percentage of ethylene oxide (OE), said at least a polyether polyol being in an amount of 20 to 95 parts by weight on 100 parts by weight of the polyol composition b).

Further characteristics and advantages of the invention will be apparent from the following detailed description made with reference to the illustrative and non-limiting examples of carrying out the invention and to the annexed figures wherein:
- figure 1 shows a hysteresis test carried out at 30°C on a sample of viscoelastic polyurethane foam of the invention and on a sample of foam for comparison;
- figure 2 shows a hysteresis test carried out at 4°C on a sample of viscoelastic polyurethane foam of the invention and on a sample of foam for comparison;
- figure 3 shows a hysteresis test carried out both at 4°C and at 30°C on a sample of viscoelastic polyurethane foam for comparison;
- figure 4 shows a hysteresis test carried out both at 4°C and at 30°C on a sample of viscoelastic polyurethane of the invention.

The subject of the invention is therefore a viscoelastic polyurethane foam obtainable by the reaction system comprising:
a) a composition of isocyanate MDI; and
b) a polyol composition comprising at least an expanding agent, at least a fatty derivative selected from an amide of an amine C2-C10 and a fatty acid C6-C22 "alone or with" an ester of an alcohol C2-C10 and a fatty acid C6-C22, at least a surfactant, at least a catalyst and at least a polyether polyol having:
   - nominal average functionality of 3 to 6,
   - average molecular weight of 800 to 6000,
   - n° of OH of 28 to 200 mg KOH/g,
   - a percentage of ethylene oxide (OE) higher than 50%,
said at least a polyether polyol being in an amount of 20 to 95 parts by weight on 100 parts by weight of the polyol composition.

In the present invention by the term "composition a) of isocyanate MDI" is meant a composition comprising at least a diphenylmethane diisocyanate or a prepolymer derived from diphenylmethane diisocyanate.

When the composition a) of isocyanate MDI comprises said at least a diphenylmethane diisocyanate, this is preferably selected from polymeric diphenylmethane diisocyanate (PMDI), diphenylmethane-2,2-diisocyanate (2,2-MDI), diphenylmethane-2,4-diisocyanate (2,4-MDI), diphenylmethane-4,4-diisocyanate (4,4-MDI) and mixtures thereof. The diphenylmethane diisocyanate is present in the composition a) in an amount of 10 to 100 parts by weight on 100 parts by weight of the composition a) itself. Particularly, when the diphenylmethane diisocyanate includes polymeric diphenylmethane diisocyanate, this is present in an amount of 30 to 80 parts by weight on 100 parts by weight of the composition a). In a preferred embodiment, the composition a) is a composition of isomers and homologs of diphenylmethane diisocyanate having a percentage of free NCO of 25 to 32%, preferably of 29%.

When the composition a) of isocyanate MDI comprises a prepolymer, said prepolymer is a reaction product of at least a diphenylmethane diisocyanate and a polyol, said polyol having an average molecular weight above 1000 and being in an amount of 1 to 40 parts by weight on 100 parts by weight of the composition a) of isocyanate MDI. Preferably, said polyol is selected from polyester polyols, polyether polyols, polyamine polyols and mixtures thereof. The polyol for preparing the prepolymer can be advantageously formed from an initiator selected from ethylene glycol, diethylene glycol, propylene glycol, dipropylene glycol, butandiol and isomers thereof, glycerol, trimethylolpropane, trimethylolethane, methylpentandiol, 1,6-hexandiol, 1,5-pentandiol, cyclohexandimethanol, triethanolamine, pentaerythritol and sorbitol. Examples of suitable polyamine polyols can be ethylene diamine, toluene diamine, polyamines of polyphenylene, of polymethylene and of diaminodiphenylmethane and aminoalcohols. Examples of aminoalcohols include ethanolamine, diethanolamine, triethanolamine and mixtures thereof.

As far as the polyol composition b) is concerned, this comprises at least an expanding agent. Said expanding agent is preferably in an amount of 2 to 15 parts by weight, preferably of 3 to 4 parts by weight on 100 parts by weight of the polyol composition b). Said expanding agent is preferably water, however it can further comprise compounds such as chloro-fluoro-carbides (CFC), fluoro-carbides (FC) and methylene chloride.

Furthermore, the polyol composition b) comprises a fatty derivative selected from an amide of an amine C2-C10 and a fatty acid C6-C22 "alone or with" an ester of an alcohol C2-C10 and a fatty acid C6-C22. Preferably, said fatty derivative is in an amount of 0.1 to 40 parts by weight on 100 parts by weight of the polyol composition b). More preferably, it is in an amount of 0.5 to 15 parts by weight on 100 parts by weight of the polyol composition b). When the fatty derivative is an amine of a fatty acid C6-C22, this is obtained from an amine C2-C10 preferably selected from the group consisting of diethanolamine, dipropanolamine, dibutanolamine, dipentanolamine, diethanolamine, isomers and mixtures thereof. More preferably, the amide of a fatty acid C6-C22 is diethanolamide.

"The other component optionally present in the" fatty derivative is an ester of a fatty acid C6-C22. It is obtained from an alcohol C2-C10 preferably selected from the group consisting of ethylene glycol, diethylene glycol, propylene glycol and isomers thereof, dipropylene glycol, butandiol and isomers thereof, glycerol, trimethylolpropane and derivatives thereof, trimethylolethane, methylpentandiol, neopentylglycol, 1,6-hexandiol, 1,5-pentandiol, cyclohexandimethanol, pentaerythritol and derivatives thereof, sorbitol, sucrose, isomers and mixtures thereof. Optionally, the alcohol C2-C10 for the formation of the fatty derivative according to the invention can include units of propylene oxide and/or ethylene oxide in the structure thereof.

The fatty derivative is an amide alone or with ester of a fatty acid C6-C22, said fatty acid C6-C22 being of natural and synthetic origin. Preferably, said fatty acid C6-C22 is of natural origin. More preferably, said fatty acid C6-C22 of natural origin is derived from an oil selected from palm oil, coconut oil, cottonseed oil, sunflowerseed oil, rape oil, castor oil, safflower oil, tall oil, sweet almond oil, wheat germ oil, olive oil, avocado oil, argan oil, soy oil, corn oil, rice oil, borage oil, macadamia oil, oenothera oil, rose mosqueta oil and andiroba oil. Even more preferably, said fatty acid C6-C22 of natural origin is derived from soy oil.

When said fatty acid is a fatty acid of synthetic origin, it is preferably a saturated or unsaturated fatty acid C6-C22. More preferably, it is selected from caproic acid, caprylic acid, capric acid, lauric acid, myristic acid, palmitic acid, stearic acid, arachidonic acid, behenylic acid, linoleic acid, linolenic acid, oleic acid, erucic acid, myristoleic acid, palmitoleic acid, eicosapentaenoic acid, dodecaesanoeic acid and mixtures thereof.

In a preferred embodiment, the fatty derivative is diethanolamide of natural origin, preferably derived from soy oil. In an even more preferred embodiment, diethanolamide of natural origin is in an amount of 2 parts by weight on 100 parts of polyol composition b).

The polyol composition b) further comprises at least a surfactant, that can act as stabilizer and/or cell regulator. Particularly, said at least a surfactant is preferably of silicone-type, more preferably is based on copolymers having polydimethylsiloxane backbone and polyethylene oxide-co-propylene oxide pendant groups. Preferably, said at least a surfactant is in an amount not higher than 15 parts by weight on 100 parts of polyol composition b). More preferably, it is in an amount of 0.8 to 1.5 by weight on 100 parts of polyol composition b).

The polyol composition b) comprises a surfactant that can act as cell regulator. When it acts as cell regulator, it is selected from mineral oil, silicone oil, corn oil, linseed oil, palm oil, soy oil and mixtures thereof.

The polyol composition b) further comprises at least a polyether polyol having a nominal average functionality of 3 to 6, an average molecular weight of 800 to 6000, n° of OH of 28 to 200 mg KOH/g, a percentage of ethylene oxide (OE) higher than 50%, said at least a polyether polyol being in an amount of 20 to 95 parts by weight on 100 parts by weight of the polyol composition b). Preferably, said at least a polyether polyol has a nominal average functionality of 3, an average molecular weight of 1500 to 5500, n° of OH of 30 to 114 mg KOH/g, a percentage of ethylene oxide (OE) higher than 60%, said at least a polyether polyol being in an amount of 40 to 80 parts by weight on 100 parts by weight of the polyol composition. In a preferred embodiment of the invention, the polyether polyol has a nominal average functionality of 3, an average molecular weight of 4500, n° of OH of 38 mg KOH/g, a percentage of ethylene oxide (OE) of 73%, said at least a polyether polyol being in an amount of 60 parts by weight on 100 parts by weight of the polyol composition.

The polyol composition b) further comprises at least a catalyst. Suitable catalysts for the production of polyurethane foams can be nitrogen compounds, such as aliphatic amines, organometallic compounds and mixtures thereof. Particularly, said aliphatic amines can be primary, secondary or tertiary. In an preferred embodiment, 1,4-diazobicyclooctane and N,N,N,N-tetramethyl-2,2-oxybis(ethylamine) are used. The organometallic compounds instead can be stannous or stannic compounds, such as for example a stannous salt of a carboxylic acid, trialkyltin oxide, dialkyltin oxide, dialkyltin dihalide, or the like, wherein the organic moieties are hydrocarbon groups comprising 1 to 8 carbon atoms. For instance, dibutyltin dilaurate, dibutyltin diacetate, diethyltin diacetate, dihexyltin diacetate, di-2-ethylhexyltin oxide, dioctyltin dioxide, stannous octoate, stannous oleate or mixtures thereof can be used. Preferably, the at least a catalyst is in an amount of 0.5 to 10% of the polyurethane formulation.

Preferably, the polyol composition b) comprises at least a further polyether polyol having a nominal average functionality of 2, an average molecular weight of 1000 to 6000, and n° of OH of 18 to 112 mg KOH/g, said at least a second polyether polyol being in an amount not higher than 20 parts by weight on 100 parts by weight of the polyol composition b). More preferably, said at least a further polyether polyol has a nominal average functionality of 2, an average molecular weight of 1500 to 3000, and n° of OH of 38 to 75 mg KOH/g. In a preferred embodiment of the invention, said second polyether polyol has a nominal average functionality of 2, an average molecular weight of 2000, and n° of OH of 56 mg KOH/g, being said further polyether polyol in an amount of 10 parts by weight on 100 parts by weight of the polyol composition b).

Preferably, the polyol composition b) comprises at least a further polyether polyol having a nominal average functionality of 3 to 6, an average molecular weight of 200 to 2000, and n° of OH of 28 to 1500 mg KOH/g, being said at least a further polyether polyol in an amount of 30 parts by weight on 100 parts by weight of the polyol composition. Even more preferably, said at least a further polyether polyol having a nominal average functionality of 3 to 4, an average molecular weight of 300 to 1500, and n° of OH of 112 to 560 mg KOH/g. In a preferred embodiment of the invention, said third polyether polyol has a nominal average functionality of 3, an average molecular weight of 450, and n° of OH of 380 mg KOH/g, being said further polyether polyol in an amount of 18 parts by weight on 100 parts by weight of the polyol composition b).

Preferably, the polyol Composition b) comprises at least a further polyether polyol having a nominal average functionality of 3 to 6, an average molecular weight of 3000 to 6000, n° of OH of 27 to 280 mg KOH/g, a filler SAN (i.e. styrene-acrylonitrile) of 10 to 40%, being said fourth polyether polyol in an amount not higher than 30 parts by weight on 100 parts by weight of the polyol composition. Preferably, said at least a further polyether polyol has a nominal average functionality of 3 to 4, an average molecular weight of 5000 to 6000, and n° of OH of 28 to 35 mg KOH/g, a filler SAN of 15 to 20%. In a preferred embodiment of the invention, said further polyether polyol has a nominal average functionality of 3, an average molecular weight of 6000, and n° of OH of 28 mg KOH/g, a filler SAN of 17%, being said further polyether polyol in an amount of 10 parts by weight on 100 parts by weight of the polyol composition b).

More preferably, the viscoelastic polyurethane foam is obtained by the reaction system comprising:
a) a composition of isocyanate MDI; and
b) a polyol composition comprising at least an expanding agent, at least a fatty derivative selected from an amide of an amine C2-C10 and a fatty acid C6-C22 "alone or with" an ester of an alcohol C2-C10 and a fatty acid C6-C22, at least a surfactant, at least a catalyst and at least a polyether polyol having:
   - nominal average functionality of 3 to 6,
   - average molecular weight of 800 to 6000,
   - n° of OH of 28 to 200 mg KOH/g,
   - a percentage of ethylene oxide (OE) higher than 50%,
said at least a polyether polyol being in an amount of 20 to 95 parts by weight on 100 parts by weight of the polyol composition;
and a further polyether polyol is selected from the group consisting of:
- a polyether polyol having
   nominal average functionality of 2,
   average molecular weight of 1000 to 6000, and
   n° of OH of 18 to 112 mg KOH/g,
   said polyether polyol being in an amount not higher than 20 parts by weight on 100 parts by weight of the polyol composition;
- a polyether polyol having
   nominal average functionality of 3 to 6,
   average molecular weight of 200 to 2000, and
   n° of OH of 28 to 1500 mg KOH/g,
   said polyether polyol being in an amount not higher than 30 parts by weight on 100 parts by weight of the polyol composition;
- a polyether polyol having
   nominal average functionality of 3 to 6,
   average molecular weight of 3000 to 6000,
   n° of OH of 27 to 280 mg KOH/g, and
   a filler SAN of 10 to 40%,
   said fourth polyether polyol being in an amount not higher than 30 parts by weight on 100 parts by weight of the polyol composition;
and mixtures thereof.

Even more preferably, the viscoelastic polyurethane foam is obtained by the reaction system comprising:
a) a composition of isocyanate MDI; and
b) a polyol composition comprising at least an expanding agent, at least a fatty derivative selected from an amide of an amine C2-C10 and a fatty acid C6-C22 "alone or with" an ester of an alcohol C2-C10 and a fatty acid C6-C22, at least a surfactant, at least a catalyst and at least a polyether polyol having:
   - nominal average functionality of 3,
   - average molecular weight of 1500 to 5500,
   - n° of OH of 30 to 114 mg KOH/g,
   - a percentage of ethylene oxide (OE) higher than 70%,
said at least a polyether polyol being in an amount of 40 to 80 parts by weight on 100 parts by weight of the polyol composition;
and a further polyether polyol is selected from the group consisting of:
- a polyether polyol having
   nominal average functionality of 2,
   average molecular weight of 1500 to 3000, and
   n° of OH of 38 to 75 mg KOH/g,
   said polyether polyol being in an amount not higher than 20 parts by weight on 100 parts by weight of the polyol composition;
- a polyether polyol having
   nominal average functionality of 3 to 4,
   average molecular weight of 300 to 1500, and
   n° of OH of 112 to 560 mg KOH/g,
   said polyether polyol being in an amount not higher than 30 parts by weight on 100 parts by weight of the polyol composition;
- a polyether polyol having
   nominal average functionality of 3 to 4,
   average molecular weight of 5000 to 6000,
   n° of OH of 28 to 35 mg KOH/g, and
   a filler SAN of 15 to 20%,
   said polyether polyol being in an amount not higher than 30 parts by weight on 100 parts by weight of the polyol composition;
and mixtures thereof.

Advantageously, the viscoelastic polyurethane foam is obtained by the reaction system comprising:
a) a composition of isomers and homologs of isocyanate MDI having a percentage of free NCO of 25-32%; and
b) a polyol composition comprising water, diethanolamide derived from soy oil in an amount of 2 parts by weight on 100 parts by weight of polyol composition, at least a silicone surfactant, at least an amine catalyst,
   - a first polyether polyol having
      nominal average functionality of 3,
      average molecular weight of 4500,
      n° of OH of 38 mg KOH/g, and
      a percentage of ethylene oxide (OE) higher than 70%,
      being said first polyether polyol in an amount of 60 parts by weight on 100 parts by weight of polyol composition;
   - a second polyether polyol having
      nominal average functionality of 2,
      average molecular weight of 2000,
      n° of OH of 56 mg KOH/g,
      being said second polyether polyol in an amount of 10 parts by weight on 100 parts by weight of polyol composition;
   - a third polyether polyol having
      nominal average functionality of 3,
      average molecular weight of 450, and
      n° of OH of 380 mg KOH/g,
      being said third polyether polyol in an amount of 18 parts by weight on 100 parts by weight of polyol composition; and
   - a fourth polyether polyol having
      nominal average functionality of 3,
      average molecular weight of 6000,
      n° of OH of 28 mg KOH/g, and
      a filler SAN of 17%,
      being said fourth polyether polyol in an amount of 10 parts by weight on 100 parts by weight of polyol composition.

The reaction system of the invention can advantageously comprise additives and excipients useful for the formulation of a viscoelastic polyurethane foam according to the invention.

In fact, the polyol composition b) can further comprise a crosslinking agent in an amount not higher than 18 parts by weight on 100 parts by weight of polyol composition b). Preferably, said crosslinking agent is in an amount of 0.2 to 5 parts by weight on 100 parts by weight of polyol composition b). More preferably, said crosslinking agent has a n° of OH higher than 250 mg KOH/g, the crosslinking agent being a polyol having nominal average functionality of 2 or being an amine selected from diethanolamine, triethanolamine, ethylenediamine alkoxylated and mixtures thereof.

In another aspect, the present invention concerns a process for preparing a viscoelastic polyurethane foam, according to claim 30, comprising the steps of:
i) providing a composition a) of isocyanate MDI;
ii) providing a polyol composition b);
iii) stirring the polyol composition b) of the step ii) for at least 15 minutes;
iv) adding the composition a) of the step i) to the polyol composition b) of the step iii);
v) mixing the product of the step iv) for some seconds;
vi) pouring the product of the step v) in a mould; and
vii) obtaining the viscoelastic polyurethane foam, wherein in the step iv) the composition a) of isocyanate MDI and the polyol composition b) are in a ratio of 1:1 to 1:3.

Preferably, in the step iv) the composition a) of isocyanate MDI and the polyol composition b) are in a ratio of 1;1,4 to 1:2.5.

Certainly, all the aspects above-described, also advantageous and preferred, related to the composition a) of isocyanate MDI and the polyol composition b) of the reaction system of the invention are the same as for the process for preparing the viscoelastic polyurethane foam of the invention.

In a further aspect, the present invention concerns paddings made of such a foam, according to claim 32, preferably paddings of elements of furnishing components or car dressing.

Some examples now follow, that are herewith provided in an exemplificative and non-limiting way, of the viscoelastic polyurethane foam according to the invention, as well as of evaluation of the obtained foam itself.

### Example 1

### Preparation of viscoelastic polyurethane foam according to the invention

The following compounds were provided:
- 1200 g (60 parts by weight) of a polyether polyol (PM 4500, functionality 3 and having an ethylene oxide content of 73% and n° of OH equal to 38 mg KOH/g);
- 160 g (8 parts by weight) of a polyether polyol (PM 2000, functionality 2, n° of OH equal to 56 mg KOH/g);
- 180 g (9 parts by weight) of a polyether polyol (PM 450, functionality 3, n° of OH equal to 380 mg KOH/g) ;
- 160 g (8 parts by weight) of a polyether polyol (PM 6000, functionality 3, 17% of SAN, n° of OH equal to 28 mg KOH/g);
- 200 g (10 parts by weight) of diethanolamide of a fatty acid derived from soy oil);
- 3 g (0.15 parts by weight) of a catalyst containing 67% of oxypropanol and 33% of 1,4-diazobicyclooctane, sold with the trade name of Dabco 33LV by Air Products Chemicals Europe BV;
- 2 g (0.1 parts by weight) of a catalyst containing 70% of N,N,N,N-tetramethyl-2,2-oxybis (ethylamine) and 30% of oxydipropanol, sold with the trade name of Dabco BL11 by Air Products Chemicals Europe BV;
- 30 g (1.5 parts by weight) of a silicone surfactant, sold with the trade name of Dabco DC198 by Air Products Chemicals Europe BV; and
- 68 g (3.4 parts by weight) of water.

The above listed compounds and in the above listed amounts were put in a jug under stirring for 30 minutes by means of a rotating 9 cm blade mixer at 2200 rpm.

Subsequently, 800 g of the product of such a mixing were weighted and then put in a second jug.

Separately, in a glass 1140 g (57 parts by weight) of isocyanate MDI (NCO=29%) were prepared. Such a compound was poured from the glass into the jug containing 800 g of the mixing product. The whole was further mixed for 8 seconds.

The so obtained final mixture was then poured in a 15 litres mould and left to react for not less than 6 minutes at room temperature (about 22°C), i.e. until the polymerization step was over.

Once formed, the foam was extracted and left to stand for 72 hours at about 22°C.

The mixture left in the jug was instead used for carrying out measurements of cream times and free foam density, as referred in the Example 6.

### Example 2

### Preparation of viscoelastic polyurethane foam according to the invention

The following compounds were provided:
- 1300 g (65 parts by weight) of a polyether polyol (PM 4500, functionality 3 and having an ethylene oxide content of 73% and n° of OH equal to 38 mg KOH/g);
- 200 g (10 parts by weight) of a polyether polyol (PM 2000, functionality 2, n° of OH equal to 56 mg KOH/g);
- 200 g (10 parts by weight) of a polyether polyol (PM 6000, functionality 3, 17% of SAN, n° of OH equal to 28 mg KOH/g);
- 400 g (20 parts by weight) of diethanolamide of a fatty acid derived from soy oil);
- 3.2 g (0.16 parts by weight) of a catalyst containing 67% of oxypropanol and 33% of 1,4-diazobicyclooctane, sold with the trade name of Dabco 33LV by Air Products Chemicals Europe BV;
- 2 g (0.1 parts by weight) of a catalyst containing 70% of N,N,N,N-tetramethyl-2,2-oxybis (ethylamine) and 30% of oxydipropanol, sold with the trade name of Dabco BL11 by Air Products Chemicals Europe BV;
- 30 g (1.5 parts by weight) of a silicone surfactant, sold with the trade name of Dabco DC198 by Air Products Chemicals Europe BV; and
- 64 g (3.2 parts by weight) of water.

The above listed compounds and in the above listed amounts were put in a jug under stirring for 30 minutes by means of a rotating 9 cm blade mixer at 2200 rpm.

Subsequently, 800 g of the product of such a mixing were weighted and then put in a second jug.

Separately, in a glass 1040 g (52 parts by weight) of isocyanate MDI (NCO=29%) were prepared. Such a compound was poured from the glass into the jug containing 800 g of the mixing product. The whole was further mixed for 8 seconds.

The so obtained final mixture was then poured in a 15 litres mould and left to react for not less than 6 minutes at room temperature (about 22°C), i.e. until the polymerization step was over.

Once formed, the foam was extracted and left to stand for 72 hours at about 22°C.

The mixture left in the jug was instead used for carrying out measurements of cream times and free foam density, as referred in the Example 6.

### Example 3

### Preparation of viscoelastic polyurethane foam according to the invention

The following compounds were provided:
- 1200 g (60 parts by weight) of a polyether polyol (PM 4500, functionality 3 and having an ethylene oxide content of 73% and n° of OH equal to 38 mg KOH/g);
- 200 g (10 parts by weight) of a polyether polyol (PM 2000, functionality 2, n° of OH equal to 56 mg KOH/g);
- 360 g (18 parts by weight) of a polyether polyol (PM 450, functionality 3, n° of OH equal to 380 mg KOH/g);
- 200 g (10 parts by weight) of a polyether polyol (PM 6000, functionality 3, 17% of SAN, n° of OH equal to 28 mg KOH/g);
- 40 g (2 parts by weight) of diethanolamide of a fatty acid derived from soy oil);
- 3.2 g (0.16 parts by weight) of a catalyst containing 67% of oxypropanol and 33% of 1,4-diazobicyclooctane, sold with the trade name of Dabco 33LV by Air Products Chemicals Europe BV;
- 4.2 g (0.21 parts by weight) of a catalyst containing 70% of N,N,N,N-tetramethyl-2,2-oxybis (ethylamine) and 30% of oxydipropanol, sold with the trade name of Dabco BL11 by Air Products Chemicals Europe BV;
- 30 g (1.5 parts by weight) of a silicone surfactant, sold with the trade name of Dabco DC198 by Air Products Chemicals Europe BV; and
- 80 g (4 parts by weight) of water.

The above listed compounds and in the above listed amounts were put in a jug under stirring for 30 minutes by means of a rotating 9 cm blade mixer at 2200 rpm.

Subsequently, 800 g of the product of such a mixing were weighted and then put in a second jug.

Separately, in a glass 1220 g (61 parts by weight) of isocyanate MDI (NCO=29%) were prepared. Such a compound was poured from the glass into the jug containing 800 g of the mixing product. The whole was further mixed for 8 seconds.

The so obtained final mixture was then poured in a 15 litres mould and left to react for not less than 6 minutes at room temperature (about 22°C), i.e. until the polymerization step was over.

Once formed, the foam was extracted and left to stand for 72 hours at about 22°C.

The mixture left in the jug was instead used for carrying out measurements of cream times and free foam density, as referred in the Example 6.

### Comparative example 4

### Preparation of viscoelastic polyurethane foam for comparison

The following compounds were provided:
- 1200 g (60 parts by weight) of a polyether polyol (PM 4500, functionality 3 and having an ethylene oxide content of 73% and n° of OH equal to 38 mg KOH/g);
- 200 g (10 parts by weight) of a polyether polyol (PM 2000, functionality 2, n° of OH equal to 56 mg KOH/g);
- 400 g (20 parts by weight) of a polyether polyol (PM 450, functionality 3, n° of OH equal to 380 mg KOH/g);
- 200 g (10 parts by weight) of a polyether polyol (PM 6000, functionality 3, 17% of SAN, n° of OH equal to 28 mg KOH/g);
- 3.6 g (0.18 parts by weight) of a catalyst containing 67% of oxypropanol and 33% of 1,4-diazobicyclooctane, sold with the trade name of Dabco 33LV by Air Products Chemicals Europe BV;
- 4 g (0.2 parts by weight) of a catalyst containing 70% of N,N,N,N-tetramethyl-2,2-oxybis (ethylamine) and 30% of oxydipropanol, sold with the trade name of Dabco BL11 by Air Products Chemicals Europe BV;
- 30 g (1.5 parts by weight) of a silicone surfactant, sold with the trade name of Dabco DC198 by Air Products Chemicals Europe BV; and
- 80 g (4 parts by weight) of water.

The above listed compounds and in the above listed amounts were put in a jug under stirring for 30 minutes by means of a rotating 9 cm blade mixer at 2200 rpm.

Subsequently, 800 g of the product of such a mixing were weighted and then put in a second jug.

Separately, in a glass 1220 g (61 parts by weight) of isocyanate MDI (NCO=29%) were prepared. Such a compound was poured from the glass into the jug containing the 800 g of the mixing product. The whole was further mixed for 8 seconds.

The so obtained final mixture was then poured in a 15 litres mould and left to react for not less than 6 minutes at room temperature (about 22°C), i.e. until the polymerization step was over.

Once formed, the foam was extracted and left to stand for 72 hours at about 22°C.

The mixture left in the jug was instead used for carrying out measurements of cream times and free foam density, as referred in the Example 6.

### Comparative example 5

### Preparation of viscoelastic polyurethane foam for comparison

The following compounds were provided:
- 1100 g (55 parts by weight) of a polyether polyol (PM 4500, functionality 3 and having an ethylene oxide content of 73% and n° of OH equal to 38 mg KOH/g);
- 260 g (13 parts by weight) of a polyether polyol (PM 2000, functionality 2, n° of OH equal to 56 mg KOH/g);
- 340 g (17 parts by weight) of a polyether polyol (PM 450, functionality 3, n° of OH equal to 380 mg KOH/g);
- 300 g (15 parts by weight) of a polyether polyol (PM 6000, functionality 3, 17% of SAN, n° of OH equal to 28 mg KOH/g);
- 3.2 g (0.16 parts by weight) of a catalyst containing 67% of oxypropanol and 33% of 1,4-diazobicyclooctane, sold with the trade name of Dabco 33LV by Air Products Chemicals Europe BV;
- 3.6 g (0.18 parts by weight) of a catalyst containing 70% of N,N,N,N-tetramethyl-2,2-oxybis (ethylamine) and 30% of oxydipropanol, sold with the trade name of Dabco BL11 by Air Products Chemicals Europe BV;
- 30 g (1.5 parts by weight) of a silicone surfactant, sold with the trade name of Dabco DC198 by Air Products Chemicals Europe BV; and
- 64 g (3.2 parts by weight) of water.

The above listed compounds and in the above listed amounts were put in a jug under stirring for 30 minutes by means of a rotating 9 cm blade mixer at 2200 rpm.

Subsequently, 800 g of the product of such a mixing were weighted and then put in a second jug.

Separately, in a glass 1020 g (51 parts by weight) of isocyanate MDI (NCO=29%) were prepared. Such a compound was poured from the glass into the jug containing the 800 g of the mixing product. The whole was further mixed for 8 seconds.

The so obtained final mixture was then poured in a 15 litres mould and left to react for not less than 6 minutes at room temperature (about 22°C), i.e. until the polymerization step was over.

Once formed, the foam was extracted and left to stand for 72 hours at about 22°C.

The mixture left in the jug was instead used for carrying out measurements of cream times and free foam density, as referred in the Example 6.

### Example 6

### Evaluation of the viscoelastic polyurethane foams obtained by the previous examples

The following tests on the samples obtained by the Examples 1-5 were carried out:
- evaluation of cream time, i.e. the time between the starting of the mixing and the first visible starting of foam formation;
- free foam density, i.e. the density shown by a foam obtained under free expansion conditions in time and space;
- moulding density, i.e. the density of the foam extracted from the mould;
- residual deformation, i.e. deformation at compression of 50% on foam samples put in oven at 70°C for 22 hours;
- touch behaviour at low temperatures, i.e. behaviour of the foam samples immediately after being kept at 4°C for 24°C.

The results of such tests are reported in the following table:

| TESTS | example 1 | example 2 | example 3 | comparative example 4 | comparative example 5 |
|---|---|---|---|---|---|
| Cream times (sec.) | 10-14 | 10-14 | 8-12 | 8-12 | 8-12 |
| Free foam density (kg/m³) | 48 | 50 | 40 | 42 | 48 |
| Moulding density (kg/m³) | 60 | 62 | 52 | 54 | 60 |
| Residual deformation at 50% (%) | 4 | 3.8 | 4.2 | 4.3 | 4.3 |
| Touch behaviour | soft | soft | soft | hard | hard |

As deducted from the above table, the viscoelastic polyurethane foams obtained according to the invention showed themselves soft even at low temperatures, while conveniently keeping good values relating to other technical features. Particularly, it was seen that the foam obtained by the Example 3 showed the best features.

Therefore, further tests were carried out, by comparing the foam of the Example 3 with the foam of the comparative Example 4.

### Example 7

### Comparative evaluation between the foam of the invention and the foam for comparison

A sample of foam of the invention obtained according to the Example 3 and a sample of foam for comparison obtained according to the comparative Example 4 were taken.

The mixing procedure was the same procedure carried out in the examples, except in that 50 kg of product were prepared, differently from 2 kg of the previous examples.

4 samples of the invention (as by Example 3) and 4 samples of the comparative example (as by Example 4) were prepared.

Specifically were prepared:
- by Example 3: two samples in laboratory, referred as 3A, and two samples by means of a high pressure foam machine by using 50 kg of industrial polyol mixture, referred as 3B;
- by Example 4: two samples in laboratory, referred as 4A, and two samples by means of a high pressure foam machine by using 50 kg of industrial polyol mixture, referred as 4B.

The obtained foams were subsequently subjected to tests both at a temperature of 30°C and at a temperature of 4°C. The samples were analysed by the University of Lecce, Department of the Innovation Engineering.

Tests of hysteresis (loading and unloading) were carried out up to a maximum deformation value of 50% of the initial thickness of each specimen.

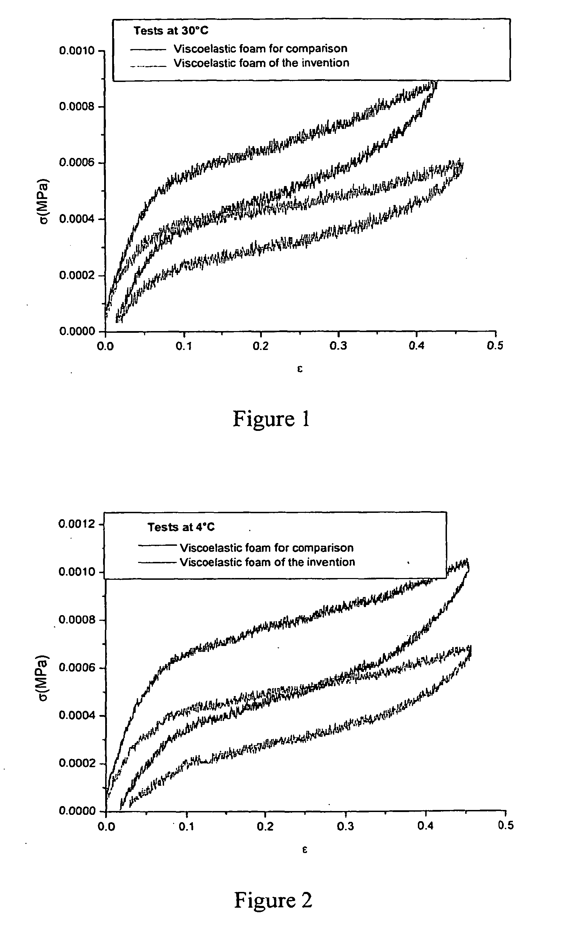

In Figure 1, the results of tests carried out at 30°C on the foam of the invention (grey coloured line) and on the foam for comparison (black coloured line) are reported. It was seen that the behaviour of the viscoelastic polyurethane foam of the invention, i.e. comprising diethanolamide with a fatty acid derived from soy oil, was significantly different from that of the viscoelastic polyurethane foam for comparison. Particularly, the plateau (i.e. the low slope area observed at deformation values higher than 0.1) was at lower strain values.

This denoted that viscoelastic foam of the invention, by having a superior softness (lower values of compression force) and by having higher hysteresis values (viscoelasticity), determines a superior comfort. In Figure 2, the results of tests carried out on the foam of the invention (grey coloured line) and on the foam for comparison (black coloured line), only just extracted from a fridge wherein they were kept for 2 days at a temperature of 4°C, are reported. It was seen a behaviour similar to that observed in Figure 1 both in the case of the foam of the invention and in the case of the foam for comparison.

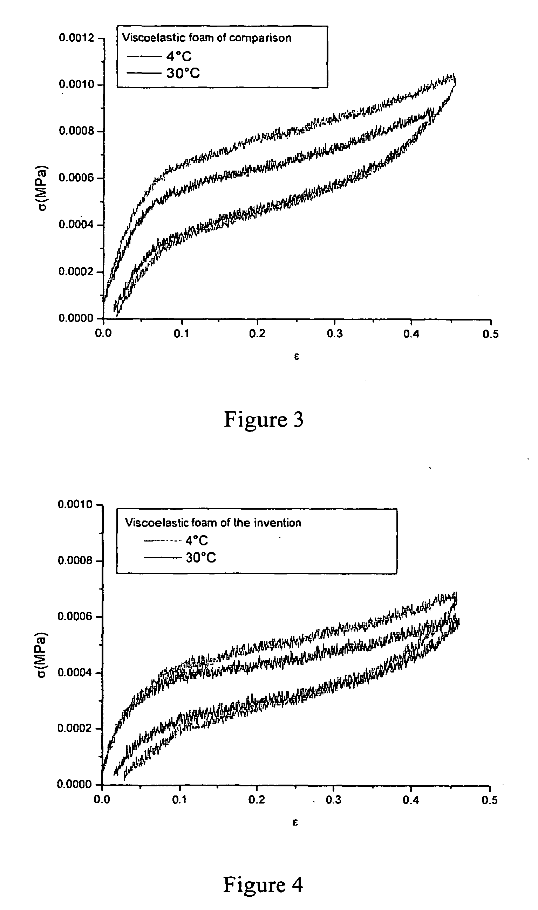

In Figure 3 and Figure 4, the curves strain-deformation at two different temperatures (4°C e 30°C) are reported, for the viscoelastic polyurethane foam for comparison and of the invention, respectively. For both the foams it was seen an increase of initial hardness of the material (given by the slope of the curve at the origin) and of the strain at the plateau when the temperature decreases. However, for the foam of the invention such differences were much more limited thus resulting in a minor hardness with respective maintenance of comfort even at low temperatures.

The values of hysteresis of the different tests were then calculated, and reported in Table.

**Table**

| **sample** | **loading area** | **unloading area** | **hysteresis** |
|---|---|---|---|
| Foam for comparison (example 4A) (30°C) | 3.16719E-4 | 2.34234E-4 | 0.26044 |
| Foam for comparison (example 4B (30°C) | 2.70024E-4 | 2.02184E-4 | 0.25124 |
| Foam for comparison (example 4A) (4°C) | 3.50453E-4 | 2.25912E-4 | 0.35537 |
| Foam for comparison (example 4B) (4°C) | 3.43472E-4 | 2.21096E-4 | 0.35629 |
| Foam of the invention (example 3A) (30°C) | 1.99377E-4 | 1.42357E-4 | 0.28599 |
| Foam of the invention (example 3B) (30°C) | 1.94918E-4 | 1.379E-4 | 0.29252 |
| Foam of the invention (example 3A) (4°C) | 2.22008E-4 | 1.35972E-4 | 0.38754 |
| Foam of the invention (example 3B) (4°C) | 2.26259E-4 | 1.36298E-4 | 0.3976 |

For all the samples, it is seen that hysteresis increases when the temperature decreases. That was mainly due to the increasing of the loading area, while the unloading area remained substantially unchanged.

Considering the average values of hysteresis, it was observed that the viscoelastic foam for comparison had a hysteresis value of 0.25584 at 30°C and of 0.35583 at 4°C. Therefore, the percentage variation of hysteresis, from 30°C to 4°C, was 39.10. In the case of the viscoelastic foam of the invention instead, the average hysteresis at 30°C was 0.28926 and at 4°C was 0.39257. Therefore, the percentage variation of hysteresis of the foam of the invention was 35.7%. This confirmed that the viscoelastic foam of the invention, comprising the dialkanolamide of natural origin, specifically from a fatty acid derived from soy oil, showed improved viscoelasticity properties with respect to the foam for comparison, even at low temperatures on the order of 4°C.

Therefore, the viscoelastic polyurethane foam of the invention allows to obtain paddings that show good viscoelastic performances even at low temperatures and to obtain softer foams (factors that increase the perceived comfort) through a process that, advantageously, can contemplate the use of components of vegetal origin in the reaction system.

## Claims

1. A viscoelastic polyurethane foam obtainable by the reaction system comprising:
a) a composition of isocyanate MDI; and
b) a polyol composition comprising at least an expanding agent, at least one fatty derivative, at least a surfactant, at least a catalyst and at least a polyether polyol having:
- nominal average functionality of 3 to 6,
- a average molecular weight of 800 to 6000,
- n° of OH of 28 to 200 mg KOH/g,
- a percentage of ethylene oxide (OE) higher than 50%
said at least a polyether polyol being in an amount of 20 to 95 parts by weight on 100 parts by weight of the polyol composition, **characterized in that** said at least one fatty acid derivative is selected from the group consisting of:
• an amide of an amine C2-C10 and a fatty acid C6-C22, or
• an amide of an amine C2-C10 and a fatty acid C6-C22 with an ester of an alcohol C2-C10 and a fatty acid C6-C22,

2. The viscoelastic polyurethane foam of claim 1 obtainable by the reaction system wherein the at least a polyether polyol has:
- nominal average functionality of 3,
- average molecular weight of 1500 to 5500,
- n° of OH of 30 to 114 mg KOH/g,
- a percentage of ethylene oxide (OE) higher than 60%,
said at least a polyether polyol being in an amount of 40 to 80 parts by weight on 100 parts by weight of the polyol composition.

3. The viscoelastic polyurethane foam of claim 1 or 2 obtainable by the reaction system wherein the polyol composition b) comprises at least a further polyether polyol selected from the group consisting of:
- a polyether polyol having
nominal average functionality of 2,
average molecular weight of 1000 to 6000, and
n° of OH of 18 to 112 mg KOH/g,
said polyether polyol being in an amount not higher than 20 parts by weight on 100 parts by weight of the polyol composition;
- a polyether polyol having
nominal average functionality of 3 to 6,
average molecular weight of 200 to 2000, and
n° of OH of 28 to 1500 mg KOH/g,
said polyether polyol being in an amount not higher than 30 parts by weight on 100 parts by weight of the polyol composition;
- a polyether polyol having
nominal average functionality of 3 to 6,
average molecular weight of 3000 to 6000,
n° of OH of 27 to 280 mg KOH/g, and
a filler SAN of 10 to 40%,
said polyether polyol being in an amount not higher than 30 parts by weight on 100 parts by weight of the polyol composition;
and mixtures thereof.

4. The viscoelastic polyurethane foam of claim 3, wherein in the polyol composition b) the further polyether polyol is selected from the group consisting of:
- a polyether polyol having
nominal average functionality of 2,
average molecular weight of 1500 to 3000, and
n° of OH of 38 to 75 mg KOH/g,
said polyether polyol being in an amount not higher than 20 parts by weight on 100 parts by weight of the polyol composition;
- a polyether polyol having
nominal average functionality of 3 to 4,
average molecular weight of 300 to 1500, and
n° of OH of 112 to 560 mg KOH/g,
said polyether polyol being in an amount not higher than 30 parts by weight on 100 parts by weight of the polyol composition;
- a polyether polyol having
nominal average functionality of 3 to 4,
average molecular weight of 5000 to 6000,
n° of OH of 28 to 35 mg KOH/g, and
a filler SAN of 15 to 20%,
said polyether polyol being in an amount not higher than 30 parts by weight on 100 parts by weight of the polyol composition;
and mixtures thereof.

5. The viscoelastic polyurethane foam according to any one of claims 1-4, wherein the fatty derivative of the polyol composition is in an amount of 0.1 to 40 parts by weight on 100 parts by weight of the polyol composition b).

6. The viscoelastic polyurethane foam of claim 5, wherein the fatty derivative of the polyol composition b) is in an amount of 0.5 to 15 parts by weight on 100 parts by weight of the polyol composition b).

7. The viscoelastic polyurethane foam according to any one of claims 1-6, wherein the fatty derivative of the polyol composition b) is an amide of a fatty acid C6-C22, obtained from an amine C2-C10 selected from the group consisting of diethanolamine, dipropanolamine, dibutanolamine, dipentanolamine, diethanolamine, isomers and mixtures thereof.

8. The viscoelastic polyurethane foam of claim 7, wherein the fatty derivative of the polyol composition b) is diethanolamide of a fatty acid C6-C22.

9. The viscoelastic polyurethane foam according to any one of claims 1-8, wherein the fatty derivative of the polyol composition b) is an ester of a fatty acid C6-C22, obtained from an alcohol C2-C10 preferably selected from the group consisting of ethylene glycol, diethylene glycol, propylene glycol and isomers thereof, dipropylene glycol, butandiol and isomers thereof, glycerol, trimethylolpropane and derivatives thereof, trimethylolethane, methylpentandiol, neopentylglycol, 1,6-hexandiol, 1,5-pentandiol, cyclohexandimethanol, pentaerythritol and derivatives thereof, sorbitol, sucrose, isomers and mixtures thereof.

10. The viscoelastic polyurethane foam according to any one of claims 1-9, wherein the fatty derivative of the polyol composition b) is an amide and/or ester of fatty acid C6-C22 of natural origin.

11. The viscoelastic polyurethane foam of claim 10, wherein said fatty acid C6-C22 of natural origin is derived from an oil selected from the group consisting of palm oil, coconut oil, cottonseed oil, sunflowerseed oil, rape oil, castor oil, safflower oil, tall oil, sweet almond oil, wheat germ oil, olive oil, avocado oil, argan oil, soy oil, corn oil, rice oil, borage oil, macadamia oil, oenothera oil, rose mosqueta oil and andiroba oil.

12. The viscoelastic polyurethane foam of claim 11, wherein said fatty acid C6-C22 of natural origin is derived from soy oil.

13. The viscoelastic polyurethane foam according to any one of claims 1-12, wherein the fatty derivative of the polyol composition b) is a fatty acid of synthetic origin.

14. The viscoelastic polyurethane foam of claim 13, wherein the fatty derivative of the polyol composition b) is a fatty acid C6-C22 selected from caproic acid, caprylic acid, capric acid, lauric acid, myristic acid, palmitic acid, stearic acid, arachidonic acid, behenylic acid, linoleic acid, linolenic acid, oleic acid, erucic acid, myristoleic acid, palmitoleic acid, eicosapentaenoic acid, dodecaesanoeic acid and mixtures thereof.

15. The viscoelastic polyurethane foam according to any one of claims 1-14, obtainable by the reaction system wherein the composition a) of isocyanate MDI comprises at least a diphenylmethane diisocyanate or a prepolymer.

16. The viscoelastic polyurethane foam of claim 15, obtainable by the reaction system wherein when the composition a) of isocyanate MDI comprises at least a diphenylmethane diisocyanate, said diphenylmethane diisocyanate is selected from polymeric diphenylmethane diisocyanate (PMDI), diphenylmethane-2,2-diisocyanate (2,2-MDI), diphenylmethane-2,4-diisocyanate (2,4-MDI), diphenylmethane-4,4-diisocyanate (4,4-MDI) and mixtures thereof.

17. The viscoelastic polyurethane foam of claim 16, obtainable by the reaction system wherein the composition a) of isocyanate MDI comprises at least a diphenylmethane diisocyanate in an amount of 10 to 100 parts by weight on 100 parts by weight of composition a) .

18. The viscoelastic polyurethane foam according to claim 16 or 17, obtainable by the reaction system wherein the composition a) of isocyanate MDI comprises polymeric diphenylmethane diisocyanate in an amount of 30 to 80 parts by weight on 100 parts by weight of composition a).

19. The viscoelastic polyurethane foam of claim 15, obtainable by the reaction system wherein when the composition a) of isocyanate MDI comprises a prepolymer, said prepolymer is a reaction product between an isocyanate MDI and a polyol, said polyol having an average molecular weight higher than 1000 and being in an amount of 1 to 40 by weight on 100 parts of the composition a) of isocyanate MDI.

20. The viscoelastic polyurethane foam of claim 19, obtainable by the reaction system wherein the composition a) of isocyanate MDI comprises a prepolymer as a reaction product between an isocyanate MDI and a polyol, said polyol being selected from polyester polyols, polyether polyols, polyamine polyols and mixtures thereof.

21. The viscoelastic polyurethane foam according to any one of claims 1-20, obtainable by the reaction system wherein the polyol composition b) the at least an expanding agent is in an amount of 2 to 15 parts by weight, preferably 3 to 4 parts by weight on 100 parts by weight of the polyol composition b).

22. The viscoelastic polyurethane foam of claim 21, obtainable by the reaction system wherein in the polyol composition b) the at least an expanding agent is water.

23. The viscoelastic polyurethane foam according to any one of claims 1-22, obtainable by the reaction system wherein the at least a surfactant of the polyol composition b) is of silicone-type, preferably it is based on copolymers having polydimethylsiloxane structure and pendant polyethylenoxide-polypropylenoxide groups.

24. The viscoelastic polyurethane foam according to claim 23, wherein said at least a surfactant is in an amount not higher than 15 parts by weight on 100 parts by weight of polyol composition b), preferably, is in an amount of 0.8 to 1.5 parts by weight on 100 parts by weight of polyol composition b).

25. The viscoelastic polyurethane foam according to any one of claims 1-24, obtainable by the reaction system wherein the at least a catalyst of polyol composition b) is a nitrogen compound, an organometallic compound or mixtures thereof.

26. The viscoelastic polyurethane foam according to claim 1, obtainable by the reaction system comprising:
a) a composition of isomers and homologs of isocyanate MDI having a percentage of free NCO of 25-32%; and
b) a polyol composition comprising water, diethanolamide derived from soy oil in an amount of 2 parts by weight on 100 parts by weight of polyol composition, at least a silicone surfactant, at least an amine catalyst,
- a first polyether polyol having
nominal average functionality of 3,
average molecular weight of 4500,
n° of OH of 38 mg KOH/g, and
a percentage of ethylene oxide (OE) higher than 70%,
being said first polyether polyol in an amount of 60 parts by weight on 100 parts by weight of polyol composition;
- a second polyether polyol having
nominal average functionality of 2,
average molecular weight of 2000,
n° of OH of 56 mg KOH/g,
being said second polyether polyol in an amount of 10 parts by weight on 100 parts by weight of polyol composition;
- a third polyether polyol having
nominal average functionality of 3,
average molecular weight of 450, and
n° of OH of 380 mg KOH/g,
being said third polyether polyol in an amount of 18 parts by weight on 100 parts by weight of polyol composition; and
- a fourth polyether polyol having
nominal average functionality of 3,
average molecular weight of 6000,
n° of OH of 28 mg KOH/g, and
a filler SAN of 17%,
being said second polyether polyol in an amount of 10 parts by weight on 100 parts by weight of polyol composition.

27. The viscoelastic polyurethane foam according to any one of claims 1-26, obtainable by the reaction system wherein the polyol composition b) further comprises a crosslinking agent in an amount not higher than 18 parts by weight on 100 parts by weight of polyol composition b).

28. The viscoelastic polyurethane foam according to claim 27, obtainable by the reaction system wherein in the polyol composition b) the crosslinking agent is in an amount of 0.2 a 5 parts by weight on 100 parts by weight of polyol composition b).

29. The viscoelastic polyurethane foam according to claim 27 or 28 obtainable by the reaction system wherein in the polyol composition b) the crosslinking agent has a n° of OH higher than 250 mg KOH/g, being said crosslinking agent a polyol having a nominal average functionality of 2 or an amine selected from diethanolamine, triethanolamine, alkoxylated ethylenediamine and mixture thereof.

30. A process for preparing a viscoelastic polyurethane foam according to any one of claims 1-29 comprising the steps of:
i) providing a composition a) of isocyanate MDI according to any one of claims 1, 15-20;
ii) providing a polyol composition b) according to any one of claims 1-14, 21-29;
iii) stirring the polyol composition b) of the step ii) for at least 15 minutes;
iv) adding the composition a) of the step i) to the polyol composition b) of the step iii);
v) mixing the product of the step iv) for some seconds;
vi) pouring the product of the step v) in a mould; and
vii) obtaining the viscoelastic polyurethane foam,
wherein in the step iv) the composition a) of isocyanate MDI and the polyol composition b) are in a ratio of 1:1 to 1:3.

31. The process of claim 30 wherein in the step iv) the composition a) of isocyanate MDI and the polyol composition b) are in a ratio of 1:1.4 to 1:2.5.

32. A padding made of viscoelastic polyurethane foam according to any one of claims 1-29.

33. The padding of claim 32 which is a padding of elements of furnishing components or car dressing.

## Patentansprüche

1. Viskoelastischer Polyurethanschaum, erhältlich durch das Reaktionssystem, umfassend:
a) eine MDI-Isocyanatzusammensetzung und
b) eine Polyolzusammensetzung, umfassend wenigstens ein Treibmittel, wenigstens ein Fettderivat, wenigstens ein Tensid, wenigstens einen Katalysator und wenigstens ein Polyetherpolyol mit:
- einer durchschnittlichen Nominalfunktionalität von 3 bis 6,
- einem durchschnittlichen Molekulargewicht von 800 bis 6000,
- eine OH-Zahl von 28 bis 200 mg KOH/g,
- einem Ethylenoxid-(OE)-Prozentsatz größer als 50 %,
wobei das wenigstens eine Polyetherpolyol in einer Höhe von 20 bis 95 Gewichtsanteilen bezogen auf 100 Gewichtsanteile der Polyolzusammensetzung vorliegt, **dadurch gekennzeichnet, daß** das wenigstens eine Fettsäurederivat ausgewählt ist aus der Gruppe bestehend aus:
- einem Amid aus einem C2-C10-Amin und einer C6-C22-Fettsäure oder
- einem Amid aus einem C2-C10-Amin und einer C6-C22-Fettsäure mit einem Ester eines C2-C10-Alkohols und einer C6-C22-Fettsäure.

2. Viskoeleastischer Polyurethanschaum nach Anspruch 1, erhältlich durch das Reaktionssystem, wobei der wenigstens eine Polyetherpolyol
- eine durchschnittliche Nominalfunktionalität von 3,
- ein durchschnittliches Molekulargewicht von 1500 bis 5500,
- eine OH-Zahl von 30 bis 114 mg KOH/g,
- einen Ethylenoxid-(OE)-Prozentsatz größer als 60 % aufweist, wobei das wenigstens eine Polyetherpolyol in einer Höhe von 40 bis 80 Gewichtsanteilen bezogen auf 100 Gewichtsanteile der Polyolzusammensetzung vorliegt.

3. Viskoelastischer Polyurethanschaum nach Anspruch 1 oder 2, erhältlich durch das Reaktionssystem, wobei die Polyolzusammensetzung b) wenigstens ein weiteres Polyetherpolyol umfaßt, das ausgewählt ist aus der Gruppe bestehend aus
- einem Polyetherpolyol mit
einer durchschnittlichen Nominalfunktionalität von 2,
einem durchschnittlichen Molekulargewicht von 1000 bis 6000 und
eine OH-Zahl von 18 bis 112 mg KOH/g,
wobei das Polyetherpolyol in einer Höhe von nicht mehr als 20 Gewichtsanteilen bezogen auf 100 Gewichtsanteile der Polyolzusammensetzung vorliegt,
- einem Polyetherpolyol mit
einer durchschnittlichen Nominalfunktionalität von 3 bis 6,
einem durchschnittlichen Molekulargewicht von 200 bis 2000 und
eine OH-Zahl von 28 bis 1500 mg KOH/g,
wobei das Polyetherpolyol in einer Höhe von nicht mehr als 30 Gewichtsanteilen bezogen auf 100 Gewichtsanteile der Polyolzusammensetzung vorliegt,
- einem Polyetherpolyol mit
einer durchschnittlichen Nominalfunktionalität von 3 bis 6,
einem durchschnittlichen Molekulargewicht von 3000 bis 6000,
eine OH-Zahl von 27 bis 280 mg KOH/g und
einem Füllstoff SAN von 10 bis 40 %,
wobei das Polyetherpolyol in einer Höhe von nicht mehr als 30 Gewichtsanteilen bezogen auf 100 Gewichtsanteile der Polyolzusammensetzung vorliegt,
und Mischungen davon.

4. Viskoelastischer Polyurethanschaum nach Anspruch 3, wobei in der Polyolzusammensetzung b) das weitere Polyetherpolyol ausgewählt ist aus der Gruppe bestehend aus:
- einem Polyetherpolyol mit
einer durchschnittlichen Nominalfunktionalität von 2,
einem durchschnittlichen Molekulargewicht von 1500 bis 3000 und
eine OH-Zahl von 38 bis 75 mg KOH/g,
wobei das Polyetherpolyol in einer Höhe von nicht mehr als 20 Gewichtsanteilen bezogen auf 100 Gewichtsanteile der Polyolzusammensetzung vorliegt,
- einem Polyetherpolyol mit
einer durchschnittlichen Nominalfunktionalität von 3 bis 4,
einem durchschnittlichen Molekulargewicht von 300 bis 1500 und
eine OH-Zahl von 112 bis 560 mg KOH/g,
wobei das Polyetherpolyol in einer Höhe von nicht mehr als 30 Gewichtsanteilen bezogen auf 100 Gewichtsanteile der Polyolzusammensetzung vorliegt,
- einem Polyetherpolyol mit
einer durchschnittlichen Nominalfunktionalität von 3 bis 4,
einem durchschnittlichen Molekulargewicht von 5000 bis 6000,
eine OH-Zahl von 28 bis 35 mg KOH/g und
einem Füllstoff SAN von 15 bis 20 %,
wobei das Polyetherpolyol in einer Höhe von nicht mehr als 30 Gewichtsanteilen bezogen auf 100 Gewichtsanteile der Polyolzusammensetzung vorliegt,
und Mischungen davon.

5. Viskoelastischer Polyurethanschaum nach einem der Ansprüche 1 bis 4, wobei das Fettderivat der Polyolzusammensetzung in einer Höhe von 0,1 bis 40 Gewichtsanteilen bezogen auf 100 Gewichtsanteile der Polyolzusammensetzung b) vorliegt.

6. Viskoelastischer Polyurethanschaum nach Anspruch 5, wobei das Fettderivat der Polyolzusammensetzung b) in einer Höhe von 0,5 bis 15 Gewichtsanteilen bezogen auf 100 Gewichtsanteile der Polyolzusammensetzung b) vorliegt.

7. Viskoelastischer Polyurethanschaum nach einem der Ansprüche 1 bis 6, wobei das Fettderivat der Polyolzusammensetzung b) ein Amid einer C6-C22-Fettsäure ist, das aus einem C2-C10-Amin erhalten ist, das aus der Gruppe bestehend aus Diethanolamin, Dipropanolamin, Dibutanolamin, Dipentanolamin, Diethanolamin, Isomeren und Mischungen davon ausgewählt ist.

8. Viskoelastischer Polyurethanschaum nach Anspruch 7, wobei das Fettderivat der Polyolzusammensetzung b) Diethanolamid einer C6-C22-Fettsäure ist.

9. Viskoelastischer Polyurethanschaum nach einem der Ansprüche 1 bis 8, wobei das Fettderivat der Polyolzusammensetzung b) ein Ester einer C6-C22-Fettsäure ist, das aus einem C2-C10-Alkohol erhalten ist, der vorzugsweise aus der Gruppe bestehend aus Ethylenglykol, Diethylenglykol, Propylenglykol und Isomeren davon, Dipropylenglykol, Butandiol und Isomeren davon, Glycerol, Trimethylolpropan und Derivaten davon, Trimethylolethan, Methylpentandiol, Neopentylglykol, 1,6-Hexandiol, 1,5-Pentandiol, Cyclohexandimethanol, Pentaerythritol und Derivaten davon, Sorbitol, Saccharose, Isomeren und Mischungen davon ausgewählt ist.

10. Viskoelastischer Polyurethanschaum nach einem der Ansprüche 1 bis 9, wobei das Fettderivat der Polyolzusammensetzung b) ein Amid und/oder Ester einer C6-C22-Fettsäure natürlichen Ursprungs ist.

11. Viskoelastischer Polyurethanschaum nach Anspruch 10, wobei die C6-C22-Fettsäure natürlichen Ursprungs von einem Öl abgeleitet ist, das aus der Gruppe bestehend aus Palmöl, Kokosnußöl, Baumwollsamenöl, Sonnenblumenkernöl, Rapsöl, Rizinusöl, Distelöl, Tallöl, Süßmandelöl, Weizenkeimöl, Olivenöl, Avocadoöl, Arganöl, Sojaöl, Maiskeimöl, Reisöl, Borretschöl, Macadamiaöl, Nachtkerzenöl, Wildrosenöl und Andirobaöl ausgewählt ist.

12. Viskoelastischer Polyurethanschaum nach Anspruch 11, wobei die C6-C22-Fettsäure natürlichen Ursprungs von Sojaöl abgeleitet ist.

13. Viskoelastischer Polyurethanschaum nach einem der Ansprüche 1 bis 12, wobei das Fettderivat der Polyolzusammensetzung b) eine Fettsäure synthetischen Ursprungs ist.

14. Viskoelastischer Polyurethanschaum nach Anspruch 13, wobei das Fettderivat der Polyolzusammensetzung b) eine C6-C22-Fettsäure ist, die aus Capronsäure, Caprylsäure, Caprinsäure, Laurinsäure, Myristinsäure, Palmitinsäure, Stearinsäure, Arachidonsäure, Behensäure, Linolsäure, Linolensäure, Ölsäure, Erucasäure, Myristoleinsäure, Palmitoleinsäure, Eicosapentaensäure, Dodecansäure und Mischungen davon ausgewählt ist.

15. Viskoelastischer Polyurethanschaum nach einem der Ansprüche 1 bis 14, erhältlich durch das Reaktionssystem, wobei die MDI-Isocyanatzusammensetzung a) wenigstens ein Diphenylmethandiisocyanat oder ein Vorpolymer umfaßt.

16. Viskoelastischer Polyurethanschaum nach Anspruch 15, erhältlich durch das Reaktionssystem, wobei, wenn die MDI-Isocyanatzusammensetzung a) wenigstens ein Diphenylmethandiisocyanat umfaßt, das Diphenylmethandiisocyanat aus polymerem Diphenylmethandiisocyanat (PDMI), Diphenylmethan-2,2-düsocyanat (2,2-MDI), Diphenylmethan-2,4-diisocyanat (2,4-MDI), Diphenylmethan-4,4-diisocyanat (4,4-MDI) und Mischungen davon ausgewählt ist.

17. Viskoelastischer Polyurethanschaum nach Anspruch 16, erhältlich durch das Reaktionssystem, wobei die MDI-Isocyanatzusammensetzung a) wenigstens ein Diphenylmethandiisocyanat in einer Höhe von 10 bis 100 Gewichtsanteilen bezogen auf 100 Gewichtsanteile der Zusammensetzung a) umfaßt.

18. Viskoelastischer Polyurethanschaum nach Anspruch 16 oder 17, erhältlich durch das Reaktionssystem, wobei die MDI-Isocyanatzusammensetzung a) polymeres Diphenylmethandiisocyanat in einer Höhe von 30 bis 80 Gewichtsanteilen bezogen auf 100 Gewichtsanteile der Zusammensetzung a) umfaßt.

19. Viskoelastischer Polyurethanschaum nach Anspruch 15, erhältlich durch das Reaktionssystem, wobei, wenn die MDI-Isocyanatzusammensetzung a) ein Vorpolymer umfaßt, das Vorpolymer ein Reaktionsprodukt zwischen einem MDI-Isocyanat und einem Polyol ist, wobei das Polyol ein durchschnittliches Molekulargewicht von mehr als 1000 aufweist und in einer Höhe von 1 bis 40 Gewichtsanteilen bezogen auf 100 Gewichtsanteile der MDI-Isocyanatzusammensetzung a) vorliegt.

20. Viskoelastischer Polyurethanschaum nach Anspruch 19, erhältlich durch das Reaktionssystem, wobei die MDI-Isocyanatzusammensetzung a) ein Vorpolymer als ein Reaktionsprodukt zwischen einem MDI-Isocyanat und einem Polyol umfaßt, wobei das Polyol aus Polyesterpolyolen, Polyetherpolyolen, Polyaminpolyolen und Mischungen davon ausgewählt ist.

21. Viskoelastischer Polyurethanschaum nach einem der Ansprüche 1 bis 20, erhältlich durch das Reaktionssystem, wobei in der Polyolzusammensetzung b) das wenigstens eine Treibmittel in einer Höhe von 2 bis 15 Gewichtsanteilen, vorzugsweise 3 bis 4 Gewichtsanteilen, bezogen auf 100 Gewichtsanteile der Polyolzusammensetzung b) vorliegt.

22. Viskoelastischer Polyurethanschaum nach Anspruch 21, erhältlich durch das Reaktionssystem, wobei in der Polyolzusammensetzung b) das wenigstens eine Treibmittel Wasser ist.

23. Viskoelastischer Polyurethanschaum nach einem der Ansprüche 1 bis 22, erhältlich durch das Reaktionssystem, wobei das wenigstens eine Tensid der Polyolzusammensetzung b) vom Silikontyp ist, vorzugsweise basierend auf Copolymeren, die Polydimethylsiloxanstrukturen und anhängige Polyethylenoxid-Polypropylenoxid-Gruppen aufweisen.

24. Viskoelastischer Polyurethanschaum nach Anspruch 23, wobei das wenigstens eine Tensid in einer Höhe von nicht mehr als 15 Gewichtsanteilen bezogen auf 100 Gewichtsanteile der Polyolzusammensetzung b), vorzugsweise in einer Höhe von 0,8 bis 1,5 Gewichtsanteilen bezogen auf 100 Gewichtsanteile der Polyolzusammensetzung b), vorliegt.

25. Viskoelastischer Polyurethanschaum nach einem der Ansprüche 1 bis 24, erhältlich durch das Reaktionssystem, wobei der wenigstens eine Katalysator der Polyolzusammensetzung b) eine Stickstoffverbindung, eine organometallische Verbindung oder Mischungen davon ist.

26. Viskoelastischer Polyurethanschaum nach Anspruch 1, erhältlich durch das Reaktionssystem, umfassend:
a) eine Zusammensetzung von MDI-Isocyanatisomeren und -homologen mit einem Prozentsatz an freiem NCO von 25-32 % und
b) einer Polyolzusammensetzung, umfassend Wasser, von Sojaöl abgeleitetes Diethanolamid in einer Höhe von 2 Gewichtsanteilen bezogen auf 100 Gewichtsanteile der Polyolzusammensetzung, wenigstens ein Silikontensid, wenigstens einen Aminkatalysator,
- ein erstes Polyetherpolyol mit
einer durchschnittlichen Nominalfunktionalität von 3,
einem durchschnittlichen Molekulargewicht von 4500,
eine OH-Zahl von 38 mg KOH/g und
einem Ethylenoxid-(OE)-Prozentsatz größer als 70 %,
wobei das erste Polyetherpolyol in einer Höhe von 60 Gewichtsanteilen bezogen auf 100 Gewichtsanteile der Polyolzusammensetzung vorliegt,
- ein zweites Polyetherpolyol mit
einer durchschnittlichen Nominalfunktionalität von 2,
einem durchschnittlichen Molekulargewicht von 2000,
eine OH-Zahl von 56 mg KOH/g,
wobei das zweite Polyetherpolyol in einer Höhe von 10 Gewichtsanteilen bezogen auf 100 Gewichtsanteile der Polyolzusammensetzung vorliegt,
- ein drittes Polyetherpolyol mit
einer durchschnittlichen Nominalfunktionalität von 3,
einem durchschnittlichen Molekulargewicht von 450 und
eine OH-Zahl von 380 mg KOH/g,
wobei das dritte Polyetherpolyol in einer Höhe von 18 Gewichtsanteilen bezogen auf 100 Gewichtsanteile der Polyolzusammensetzung vorliegt, und
- ein viertes Polyetherpolyol mit
einer durchschnittlichen Nominalfunktionalität von 3,
einem durchschnittlichen Molekulargewicht von 6000,
eine OH-Zahl von 28 mg KOH/g und
einem Füllstoff SAN von 17 %,
wobei das vierte Polyetherpolyol in einer Höhe von 10 Gewichtsanteilen bezogen auf 100 Gewichtsanteile der Polyolzusammensetzung vorliegt.

27. Viskoelastischer Polyurethanschaum nach einem der Ansprüche 1 bis 26, erhältlich durch das Reaktionssystem, wobei die Polyolzusammensetzung b) ferner ein Vernetzungsmittel in einer Höhe von nicht mehr als 18 Gewichtsanteilen bezogen auf 100 Gewichtsanteile der Polyolzusammensetzung b) umfaßt.

28. Viskoelastischer Polyurethanschaum nach Anspruch 27, erhältlich durch das Reaktionssystem, wobei in der Polyolzusammensetzung b) das Vernetzungsmittel in einer Höhe von 0,2 bis 5 Gewichtsanteilen bezogen auf 100 Gewichtsanteile der Polyolzusammensetzung b) vorliegt.

29. Viskoelastischer Polyurethanschaum nach Anspruch 27 oder 28, erhältlich durch das Reaktionssystem, wobei in der Polyolzusammensetzung b) das Vernetzungsmittel eine eine OH-Zahl höher als 250 mg KOH/g aufweist, wobei das Vernetzungsmittel ein Polyol mit einer durchschnittlichen Nominalfunktionalität von 2 ist oder ein Amin, das aus Diethanolamin, Triethanolamin, alkoxyliertem Ethylendiamin und Mischungen davon ausgewählt ist.

30. Verfahren zum Herstellen eines viskoelastischen Polyurethanschaums nach einem der Ansprüche 1 bis 29, umfassend die Schritte des:
i) Bereitstellens einer MDI-Isocyanatzusammensetzung a) nach einem der Ansprüche 1, 15-20,
ii) Bereitstellens einer Polyolzusammensetzung b) nach einem der Ansprüche 1-14, 21-29,
iii) Rührens der Polyolzusammensetzung b) des Schritts ii) für wenigstens 15 Minuten,
iv) Hinzufügens der Zusammensetzung a) des Schritts i) zu der Polyolzusammensetzung b) des Schritts iii),
v) Mischens des Produkts des Schritts iv) für einige Sekunden,
vi) Gießens des Produkts des Schritts v) in eine Form und
vii) Erhaltens des viskoelastischen Polyurethanschaums,
wobei in dem Schritt iv) die MDI-Isocyanatzusammensetzung a) und die Polyolzusammensetzung b) in einem Verhältnis von 1:1 bis 1:3 vorliegen.

31. Verfahren nach Anspruch 30, wobei in dem Schritt iv) die MDI-Isocyanatzusammensetzung a) und die Polyolzusammensetzung b) in einem Verhältnis von 1:1,4 bis 1:2,5 vorliegen.

32. Polsterung, die aus viskoelastischem Polyurethanschaum nach einem der Ansprüche 1 bis 29 hergestellt ist.

33. Polsterung nach Anspruch 32, die eine Polsterung für Elemente von Einrichtungskomponenten oder Autoverblendung ist.

## Revendications

1. Mousse de polyuréthane viscoélastique qui peut être obtenue par le système de réaction comprenant:
a) une composition d'isocyanate MDI et
b) une composition de polyol comprenant au moins un agent de gonflement, au moins un dérivé gras, au moins un agent tensio-actif, au moins un catalyseur et au moins un polyol de polyéther ayant :
- une fonctionnalité nominale moyenne comprise entre 3 et 6,
- un poids moléculaire moyen compris entre 800 et 6000,
- un indice d'OH compris entre 28 et 200 mg KOH/g,
- un pourcentage d'oxyde d'éthylène (OE) supérieur à 50 %,
ledit au moins un polyol de polyéther étant présent en une quantité de 20 à 95 parties en poids par rapport à 100 parties en poids de ladite composition de polyol, **caractérisée par le fait que** ledit au moins un dérivé d'acide gras est choisi dans le groupe consistant en :
- un amide d'une amine en C2 à C10 et d'un acide gras en C6 à C22 ou
- un amide d'une amine en C2 à C10 et d'un acide gras en C6 à C22 avec un ester d'un alcool en C2 à C10 et d'un acide gras en C6 à C22.

2. Mousse de polyuréthane viscoélastique selon la revendication 1, qui peut être obtenue par le système de réaction dans lequel ledit au moins un polyol de polyéther présente :
- une fonctionnalité nominale moyenne de 3,
- un poids moléculaire moyen compris entre 1500 et 5500,
- un indice d'OH compris entre 30 et 114 mg KOH/g,
- un pourcentage d'oxyde d'éthylène (OE) supérieur à 60 %,
ledit au moins un polyol de polyéther étant présent en une quantité de 40 à 80 parties en poids par rapport à 100 parties en poids de ladite composition de polyol.

3. Mousse de polyuréthane viscoélastique selon la revendication 1 ou 2, qui peut être obtenue par le système de réaction dans lequel ladite composition de polyol b) comprend au moins un autre polyol de polyéther choisi dans le groupe consistant en :
- un polyol de polyéther ayant
une fonctionnalité nominale moyenne de 2,
un poids moléculaire moyen compris entre 1000 et 6000 et
un indice d'OH compris entre 18 et 112 mg KOH/g,
ledit polyol de polyéther étant présent en une quantité non pas supérieure à 20 parties en poids par rapport à 100 parties en poids de ladite composition de polyol,
- un polyol de polyéther ayant
une fonctionnalité nominale moyenne comprise entre 3 et 6,
un poids moléculaire moyen compris entre 200 et 2000 et
un indice d'OH compris entre 28 et 1500 mg KOH/g,
ledit polyol de polyéther étant présent en une quantité non pas supérieure à 30 parties en poids par rapport à 100 parties en poids de ladite composition de polyol,
- un polyol de polyéther ayant
une fonctionnalité nominale moyenne comprise entre 3 et 6,
un poids moléculaire moyen compris entre 3000 et 6000,
un indice d'OH compris entre 27 et 280 mg KOH/g et
une matière de charge SAN comprise entre 10 et 40 %,
ledit polyol de polyéther étant présent en une quantité non pas supérieure à 30 parties en poids par rapport à 100 parties en poids de ladite composition de polyol,
- et des mélanges de ceux-ci.

4. Mousse de polyuréthane viscoélastique selon la revendication 3, dans laquelle, dans ladite composition de polyol b), ledit autre polyol de polyéther est choisi dans le groupe consistant en :
- un polyol de polyéther ayant
une fonctionnalité nominale moyenne de 2,
un poids moléculaire moyen compris entre 1500 et 3000 et
un indice d'OH compris entre 38 et 75 mg KOH/g,
ledit polyol de polyéther étant présent en une quantité non pas supérieure à 20 parties en poids par rapport à 100 parties en poids de ladite composition de polyol,
- un polyol de polyéther ayant
une fonctionnalité nominale moyenne comprise entre 3 et 4,
un poids moléculaire moyen compris entre 300 et 1500 et
un indice d'OH compris entre 112 et 560 mg KOH/g,
ledit polyol de polyéther étant présent en une quantité non pas supérieure à 30 parties en poids par rapport à 100 parties en poids de ladite composition de polyol,
- un polyol de polyéther ayant
une fonctionnalité nominale moyenne comprise entre 3 et 4,
un poids moléculaire moyen compris entre 5000 et 6000,
un indice d'OH compris entre 28 et 35 mg KOH/g et
une matière de charge SAN comprise entre 15 et 20 %,
ledit polyol de polyéther étant présent en une quantité non pas supérieure à 30 parties en poids par rapport à 100 parties en poids de ladite composition de polyol,
- et des mélanges de ceux-ci.

5. Mousse de polyuréthane viscoélastique selon l'une quelconque des revendications 1 à 4, dans laquelle ledit dérivé gras de la composition de polyol est présent en une quantité comprise entre 0,1 et 40 parties en poids par rapport à 100 parties en poids de ladite composition de polyol b).

6. Mousse de polyuréthane viscoélastique selon la revendication 5, dans laquelle ledit dérivé gras de la composition de polyol b) est présent en une quantité comprise entre 0,5 et 15 parties en poids par rapport à 100 parties en poids de ladite composition de polyol b).

7. Mousse de polyuréthane viscoélastique selon l'une quelconque des revendications 1 à 6, dans laquelle ledit dérivé gras de la composition de polyol b) est un amide d'un acide gras en C6 à C22, obtenu à partir d'une amine en C2 à C10 choisie dans le groupe consistant en diéthanolamine, dipropanolamine, dibutanolamine, dipentanolamine, diéthanolamine, isomères et mélanges de ceux-ci.

8. Mousse de polyuréthane viscoélastique selon la revendication 7, dans laquelle ledit dérivé gras de la composition de polyol b) est un diéthanolamide d'un acide gras en C6 à C22.

9. Mousse de polyuréthane viscoélastique selon l'une quelconque des revendications 1 à 8, dans laquelle ledit dérivé gras de la composition de polyol b) est un ester d'un acide gras en C6 à C22, obtenu à partir d'un alcool en C2 à C10 choisi de préférence dans le groupe consistant en éthylène glycol, diéthylène glycol, propylène glycol et isomères de ceux, dipropylène glycol, butanediol et isomères de ceux-ci, glycérol, triméthylolpropane et dérivés de ceux-ci, trimethyloléthane, méthylpentanediol, néopentyleglycole, 1,6-hexanediol, 1,5-pentanediol, cyclohexanediméthanol, pentaerythritol et dérivés de ceux-ci, sorbitol, saccharose, isomères et mélanges de ceux-ci.

10. Mousse de polyuréthane viscoélastique selon l'une quelconque des revendications 1 à 9, dans laquelle le dérivé gras de la composition de polyol b) est un amide et/ou ester d'acide gras en C6 à C22 d'origine naturelle.

11. Mousse de polyuréthane viscoélastique selon la revendication 10, dans laquelle ledit acide gras en C6 à C22 d'origine naturelle est dérivé d'une huile qui est choisie dans le groupe consistant en huile de palme, huile de coco, huile de semence de coton, huile de tournesol, huile de colza, huile de ricin, huile de safre, huile de tall, huile d'amande douce, huile de germe de blé, huile d'olive, huile d'avocat, huile d'argan, huile de soja, huile de maïs, huile de riz, huile de bourrache, huile de macadamia, huile d'onagre, huile de rose musquée et huile d'andiroba.

12. Mousse de polyuréthane viscoélastique selon la revendication 11, dans laquelle ledit acide gras en C6 à C22 d'origine naturelle est dérivé de l'huile de soja.

13. Mousse de polyuréthane viscoélastique selon l'une quelconque des revendications 1 à 12, dans laquelle le dérivé gras de la composition de polyol b) est un acide gras d'origine synthétique.

14. Mousse de polyuréthane viscoélastique selon la revendication 13, dans laquelle le dérivé gras de la composition de polyol b) est un acide gras en C6 à C22 choisi parmi l'acide caproïque, l'acide caprylique, l'acide caprique, l'acide laurique, l'acide myristique, l'acide palmitique, l'acide stéarique, l'acide arachidonique, l'acide béhénique, l'acide linoléique, l'acide linolénique, l'acide oléique, l'acide érucique, l'acide myristoléique, l'acide palmitoléique, l'acide eicosapentaénoïque, l'acide dodécanoïque et les mélanges de ceux-ci.

15. Mousse de polyuréthane viscoélastique selon l'une quelconque des revendications 1 à 14, qui peut être obtenue par le système de réaction dans lequel la composition d'isocyanate MDI a) comprend au moins un diisocyanate de diphénylméthane ou un prépolymère.

16. Mousse de polyuréthane viscoélastique selon la revendication 15, qui peut être obtenue par le système de réaction dans lequel, lorsque la composition d'isocyanate MDI a) comprend au moins un diisocyanate de diphénylméthane, ledit diisocyanate de diphénylméthane est choisi parmi le diisocyanate de diphénylméthane polymère (PMDI), le 2,2-diisocyanate de diphénylméthane (2,2-MDI), le 2,4-diisocyanate de diphénylméthane (2,4-MDI), le 4,4-diisocyanate de diphénylméthane (4,4-MDI) et les mélanges de ceux-ci.

17. Mousse de polyuréthane viscoélastique selon la revendication 16, qui peut être obtenue par le système de réaction dans lequel la composition d'isocyanate MDI a) comprend au moins un diisocyanate de diphénylméthane en une quantité comprise entre 10 et 100 parties en poids par rapport à 100 parties en poids de la composition a).

18. Mousse de polyuréthane viscoélastique selon la revendication 16 ou 17, qui peut être obtenue par le système de réaction dans lequel la composition d'isocyanate MDI a) comprend du diisocyanate de diphénylméthane polymère en une quantité comprise entre 30 et 80 parties en poids par rapport à 100 parties en poids de la composition a).

19. Mousse de polyuréthane viscoélastique selon la revendication 15, qui peut être obtenue par le système de réaction dans lequel, lorsque la composition d'isocyanate MDI a) comprend un prépolymère, ledit prépolymère est un produit de réaction entre un isocyanate MDI et un polyol, ledit polyol présentant un poids moléculaire moyen supérieur à 1000 et étant présent en une quantité comprise entre 1 et 40 parties en poids par rapport à 100 parties en poids de la composition d'isocyanate MDI a).

20. Mousse de polyuréthane viscoélastique selon la revendication 19, qui peut être obtenue par le système de réaction dans lequel la composition d'isocyanate MDI a) comprend un prépolymère comme un produit de réaction entre un isocyanate MDI et un polyol, ledit polyol étant choisi parmi les polyols de polyester, les polyols de polyéther, les polyamine polyols et les mélanges de ceux-ci.

21. Mousse de polyuréthane viscoélastique selon l'une quelconque des revendications 1 à 20, qui peut être obtenue par le système de réaction dans lequel, dans la composition de polyol b), ledit au moins un agent de gonflement est présent en une quantité comprise entre 2 et 15 parties en poids, de préférence entre 3 et 4 parties en poids, par rapport à 100 parties en poids de la composition de polyol b).

22. Mousse de polyuréthane viscoélastique selon la revendication 21, qui peut être obtenue par le système de réaction dans lequel, dans la composition de polyol b), ledit au moins un agent de gonflement est de l'eau.

23. Mousse de polyuréthane viscoélastique selon l'une quelconque des revendications 1 à 22, qui peut être obtenue par le système de réaction dans lequel ledit au moins un agent tensio-actif de la composition de polyol b) est du type silicone, de préférence sur la base de copolymères ayant une structure de polydiméthylsiloxane et des groupes pendants d'oxyde de polyéthylène/d'oxyde de polypropylène.

24. Mousse de polyuréthane viscoélastique selon la revendication 23, dans laquelle ledit au moins un agent tensio-actif est présent en une quantité non pas supérieure à 15 parties en poids par rapport à 100 parties en poids de la composition de polyol b), de préférence en une quantité comprise entre 0,8 et 1,5 parties en poids par rapport à 100 parties en poids de la composition de polyol b).

25. Mousse de polyuréthane viscoélastique selon l'une quelconque des revendications 1 à 24, qui peut être obtenue par le système de réaction dans lequel ledit au moins un catalyseur de la composition de polyol b) est un composé d'azote, un composé organométallique ou des mélanges de ceux-ci.

26. Mousse de polyuréthane viscoélastique selon la revendication 1, qui peut être obtenue par le système de réaction comprenant :
a) une composition d'isomères et d'homologues d'isocyanate MDI ayant un pourcentage de NCO libre compris entre 25 et 32 % et
b) une composition de polyol comprenant de l'eau, du diéthanolamide dérivé de l'huile de soja, en une quantité de 2 parties en poids par rapport à 100 parties en poids de la composition de polyol, au moins un tensioactif siliconé, au moins un catalyseur d'amine,
- un premier polyol de polyéther ayant
une fonctionnalité nominale moyenne de 3,
un poids moléculaire moyen de 4500,
un indice d'OH de 38 mg KOH/g et
un pourcentage d'oxyde d'éthylène (OE) supérieur à 70 %,
ledit premier polyol de polyéther étant présent en une quantité de 60 parties en poids par rapport à 100 parties en poids de ladite composition de polyol,
- un deuxième polyol de polyéther ayant
une fonctionnalité nominale moyenne de 2,
un poids moléculaire moyen de 2000,
un indice d'OH de 56 mg KOH/g,
ledit deuxième polyol de polyéther étant présent en une quantité de 10 parties en poids par rapport à 100 parties en poids de ladite composition de polyol,
- un troisième polyol de polyéther ayant
une fonctionnalité nominale moyenne de 3,
un poids moléculaire moyen de 450 et
un indice d'OH de 380 mg KOH/g,
ledit troisième polyol de polyéther étant présent en une quantité de 18 parties en poids par rapport à 100 parties en poids de ladite composition de polyol, et
- un quatrième polyol de polyéther ayant
une fonctionnalité nominale moyenne de 3,
un poids moléculaire moyen de 6000,
un indice d'OH de 28 mg KOH/g et
une matière de charge SAN de 17 %,
ledit quatrième polyol de polyéther étant présent en une quantité de 10 parties en poids par rapport à 100 parties en poids de ladite composition de polyol.

27. Mousse de polyuréthane viscoélastique selon l'une quelconque des revendications 1 à 26, qui peut être obtenue par le système de réaction dans lequel la composition de polyol b) comprend en outre un réticulant en une quantité non pas supérieure à 18 parties en poids par rapport à 100 parties en poids de la composition de polyol b).

28. Mousse de polyuréthane viscoélastique selon la revendication 27, qui peut être obtenue par le système de réaction dans lequel, dans ladite composition de polyol b), ledit réticulant est présent en une quantité comprise entre 0,2 et 5 parties en poids par rapport à 100 parties en poids de la composition de polyol b).

29. Mousse de polyuréthane viscoélastique selon la revendication 27 ou 28, qui peut être obtenue par le système de réaction dans lequel, dans ladite composition de polyol b), ledit réticulant présente un indice d'OH supérieur à 250 mg KOH/g, ledit réticulation étant un polyol ayant une fonctionnalité nominale moyenne de 2 ou une amine choisie parmi la diéthanolamine, la triéthanolamine, l'éthylènediamine alcoxylée et les mélanges de ceux-ci.

30. Procédé de préparation d'une mousse de polyuréthane viscoélastique selon l'une quelconque des revendications 1 à 29, comprenant les étapes consistant à :
i) fournir une composition d'isocyanate MDI a) selon l'une quelconque des revendications 1, 15 à 20,
ii) fournir une composition de polyol b) selon l'une quelconque des revendications 1 à 14, 21 à 29,
iii) agiter ladite composition de polyol b) de l'étape ii) pour 15 minutes au moins,
iv) ajouter ladite composition a) de l'étape i) à ladite composition de polyol b) de l'étape iii),
v) mélanger le produit de l'étape iv) pour quelques secondes,
vi) couler le produit de l'étape v) dans un moule et
vii) obtenir la mousse de polyuréthane viscoélastique,
dans lequel, dans ladite étape iv), la composition d'isocyanate MDI a) et la composition de polyol b) sont dans un rapport de 1 : 1 à 1 : 3.

31. Procédé selon la revendication 30, dans lequel, dans ladite étape iv), la composition d'isocyanate MDI a) et la composition de polyol b) sont dans un rapport de 1 : 1,4 à 1 : 2,5.

32. Rembourrage réalisé à partir de mousse de polyuréthane viscoélastique selon l'une quelconque des revendications 1 à 29.

33. Rembourrage selon la revendication 32, qui est un rembourrage d'éléments de composants d'ameublement ou d'habillage de voiture.
